# FASCICULE DE BREVET EUROPEEN

(11) **EP 3 551 504 B1**
(45) Date de publication et mention de la délivrance du brevet: **02.12.2020**
(21) Numéro de dépôt: 17771485.4
(22) Date de dépôt: 30.08.2017
(51) Int. Cl.: B60R 16/023

(54) **ENSEMBLE POUR COMPARTIMENT MOTEUR DE VEHICULE AUTOMOBILE COMPRENANT UNE UNITE DE CONTROLE ELECTRONIQUE**
MOTORENRAUMVORRICHTUNG FÜR EIN KRAFTFAHRZEUG MIT EINEM ELEKTRONISCHEN STEUERGERÄT
ENGINE COMPARTMENT ASSEMBLY FOR A MOTOR VEHICLE COMPRISING AN ELECTRON CONTROL UNIT

(30) Priorité: 08.12.2016 FR 1662175
(43) Date de publication de la demande: 16.10.2019
(73) Titulaire: Renault S.A.S., 92100 Boulogne-Billancourt (FR)
(72) Inventeur: LAMARE, Max, 91410 Dourdan (FR); LURON, Stevens, 27220 Chavigny Baillail (FR)
(86) Numéro de dépôt international: PCT/FR2017/052304
(87) Numéro de publication internationale: WO 2018/104597

(56) Documents cités:
- EP-A1- 1 182 092
- EP-A2- 0 909 694
- WO-A1-2016/001532
- CN-U- 204 998 458
- DE-A1- 19 936 887
- DE-A1- 19 936 887
- US-A1- 2004 163 617
- US-A1- 2004 163 617
- US-A1- 2014 131 536

## Description

### DOMAINE TECHNIQUE

La présente invention concerne un ensemble pour un compartiment moteur de véhicule automobile comprenant une unité électronique de commande et le véhicule automobile associé.

### ETAT DE L'ART

Il est connu d'équiper les véhicules automobiles d'une ou plusieurs unités électroniques de commande (ou « Electronic Control Unit » en terminologie anglo-saxonne ou encore « ECU »).

Cette ou ces unités électroniques de commande peuvent avoir des fonctions diverses. Elles peuvent par exemple commander un groupe motopropulseur du véhicule automobile, un système de transmission du couple généré par le groupe motopropulseur à des roues du véhicule automobile ou encore un système anti-blocage des roues du véhicule automobile.

De manière classique, la ou les unités électroniques de commande sont implantées dans un compartiment moteur agencé à l'avant du véhicule automobile et logeant le groupe motopropulseur.

Le document DE 19936887 A1 décrit un ensemble pour un compartiment moteur de véhicule automobile selon le préambule de la revendication 1.

Cependant, compte-tenu de la compacité et de l'encombrement du compartiment moteur des véhicules automobiles actuels, il devient délicat de trouver un espace libre dans le compartiment moteur pour implanter la ou les unités électroniques de commande.

Il est d'autant plus délicat de trouver un tel espace libre dans le compartiment moteur que cet espace libre doit satisfaire des conditions imposées par la ou les unités électroniques de commande en vue de leur bon fonctionnement et/ou pour éviter leur détérioration. Ces conditions concernent par exemple la ventilation, la gestion des chocs et des vibrations, etc.

### PRESENTATION DE L'INVENTION

La présente invention a pour but de pallier les inconvénients précités. Pour cela, l'invention propose un ensemble pour un compartiment moteur de véhicule automobile dans lequel une unité électronique de commande est logée dans un espace libre formé entre une tôle de sous-baie de pare-brise, une tôle de doublure de pied avant et une coupelle d'amortisseur.

Plus précisément, l'invention a pour objet un ensemble pour un compartiment moteur de véhicule automobile selon la revendication 1.

L'ensemble comprend en outre un élément de support comportant une plaque de support sur laquelle est positionnée l'unité électronique de commande, la plaque de support étant inclinée par rapport à un plan parallèle au plan du véhicule, de sorte que les points de fixation de la coupelle d'amortisseur soient accessibles depuis l'avant du véhicule automobile.

Une extrémité avant de la plaque de support correspond à une extrémité supérieure de ladite plaque de support.

L'unité électronique de commande est agencée contre une face de la plaque de support agencée en regard de la surface inférieure de la tôle sous-baie de pare-brise.

La plaque de support de l'élément de support comprend une pluralité d'évidements.

L'ensemble comprend aussi :
- un tablier s'étendant globalement suivant la direction transversale et comprenant une partie supérieure reliée à une partie inférieure de la tôle de sous-baie de pare-brise, et
- un élément de support sur lequel est installé l'unité électronique de commande, l'élément de support comprenant une première patte par l'intermédiaire de laquelle l'élément de support est fixé à la tôle de doublure de pied avant, une deuxième patte par l'intermédiaire de laquelle l'élément de support est fixé à la coupelle d'amortisseur et une troisième patte par l'intermédiaire de laquelle l'élément de support est fixé au tablier.

Les première et troisième pattes comprennent chacune une portion de fixation accueillant des éléments de fixation avec la tôle de doublure de pied avant et avec le tablier respectivement, les portions de fixation des première et troisième pattes comprenant chacune une surface de fixation agencée perpendiculairement à la direction transversale et serrée respectivement contre la tôle de doublure de pied avant et contre le tablier par les éléments de fixation.

Les première et troisième pattes s'étendent respectivement depuis une extrémité avant de la plaque de support et depuis une extrémité arrière de la plaque de support.

L'ensemble comprend en outre un ou plusieurs éléments d'alimentation en énergie électrique ménagés contre la coupelle d'amortisseur, d'un côté opposé à la tôle de doublure de pied avant.

L'invention a aussi pour objet un véhicule automobile s'étendant d'avant en arrière suivant une direction longitudinale et comprenant un ensemble selon l'invention.

### PRESENTATION DES FIGURES

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence au dessin schématique annexé :
- la figure 1 est une vue schématique, de dessus d'un véhicule automobile selon un mode de réalisation de l'invention ;
- les figures 2 et 3 sont des vues partielles, en perspective, d'un compartiment moteur du véhicule automobile illustré à la figure 1 ;
- la figure 4 est une vue partielle, en perspective, du compartiment moteur représenté aux figures 2 et 3, une partie des éléments du compartiment moteur illustrés sur ces figures ayant été cachés.

### DESCRIPTION DETAILLEE

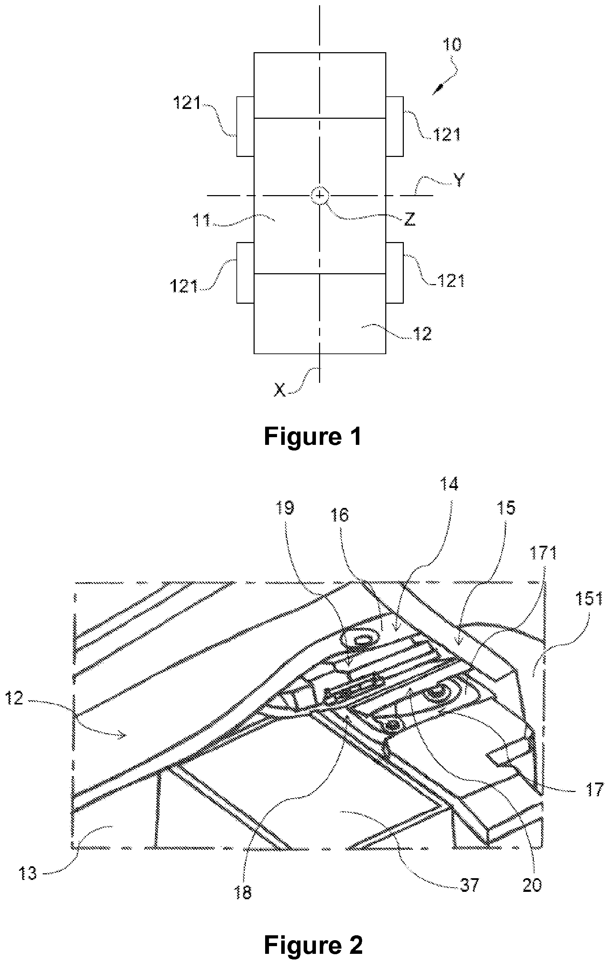

La figure 1 montre un véhicule automobile 10 selon un mode de réalisation de l'invention.

On définit un repère orthogonal comprenant une direction longitudinale X vers l'avant, une direction transversale horizontale Y et une direction verticale Z vers le haut.

Le véhicule automobile 10 s'étend d'arrière en avant suivant la direction longitudinale X. Il comprend un habitacle 11 et un compartiment moteur 12 situé à l'avant du véhicule automobile 10. Le compartiment moteur 12 abrite un groupe motopropulseur (non représenté) configuré pour produire un couple qui est ensuite transmis à des roues 121 du véhicule automobile 10.

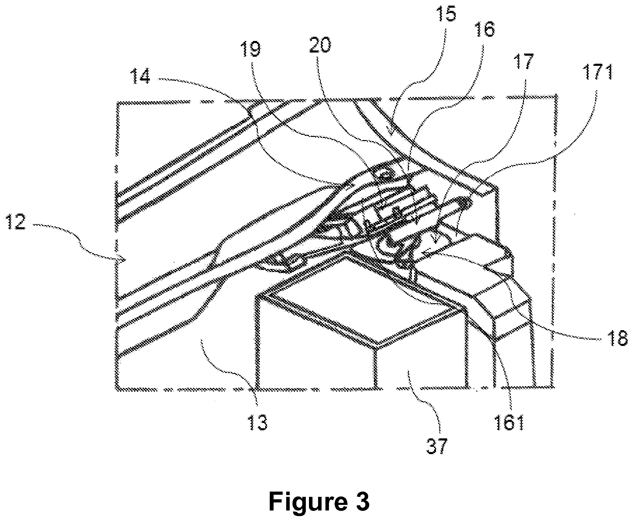

Les figures 2 à 4 montrent plus en détail le compartiment moteur 12 du véhicule automobile 10.

Le compartiment moteur 12 est séparé de l'habitable 11 par une cloison 13, aussi appelée tablier, s'étendant globalement suivant la direction transversale.

Le compartiment moteur 12 est en outre délimité par une sous-baie de pare-brise 14 par l'intermédiaire de laquelle le tablier 13 est relié à une baie de pare-brise (non représentée). Le compartiment moteur 12 est par ailleurs délimité par une doublure de pied avant 15 adjacente à un passage de roue 151 logeant en partie une roue avant du véhicule automobile 10.

La sous-baie de pare-brise 14 comprend une tôle s'étendant globalement suivant la direction transversale Y. La tôle de sous-baie de pare-brise 14 est inclinée d'avant en arrière par rapport à un plan parallèle à la direction longitudinale X et à la direction transversale Y, une extrémité avant de la tôle de sous-baie de pare-brise 14 correspondant à une extrémité supérieure de ladite tôle 14. L'extrémité avant de la tôle de sous-baie de pare-brise 14 est disposée à une hauteur plus élevée que l'extrémité arrière de la tôle de sous-baie de pare-brise 14 suivant la direction verticale Z.

La tôle de sous-baie de pare-brise 14 est reliée, par une partie inférieure, à une partie supérieure du tablier 13. La tôle de sous-baie de pare-brise 14 est reliée, par une partie supérieure, à une partie inférieure de la baie de pare-brise.

La tôle de sous-baie de pare-brise 14 est en outre reliée, par l'une de ses extrémités 16 suivant la direction transversale Y, à la doublure de pied avant 15.

La doublure de pied avant 15 comprend elle-même une tôle s'étendant globalement suivant la direction verticale Z. Dans l'exemple illustré aux figures 2 à 4, la doublure de pied avant 15 est une doublure de pied avant gauche.

Le compartiment moteur 12 comprend en outre une coupelle d'amortisseur 17 couplée à une jambe de force d'une suspension (non représentée) de la roue avant. Dans l'exemple illustré aux figures 2 à 4, la roue avant est une roue avant gauche.

La coupelle d'amortisseur 17 présente une forme globalement cylindrique selon la direction verticale Z, par exemple de section transversale carrée. La coupelle d'amortisseur 17 est aplatie suivant la direction verticale Z.

La coupelle d'amortisseur 17 comprend par exemple une ouverture agencée parallèlement à la direction verticale Z, le long de laquelle coulisse la jambe de force. La jambe de force peut coulisser à l'intérieur de l'ouverture jusqu'à faire saillie de ladite ouverture et se trouver en regard d'une surface supérieure 171 de la coupelle d'amortisseur 17, de la tôle de sous-baie de pare-brise 14 et de la tôle de doublure de pied avant 15.

La coupelle d'amortisseur 17, notamment une surface supérieure 171 de la coupelle d'amortisseur 17, est adjacente à la tôle de doublure de pied avant 15 et est agencée en regard et à distance d'une surface inférieure 161 de la tôle de sous-baie de pare-brise 14. La coupelle d'amortisseur 17 est par exemple agencée contre la tôle de doublure de pied avant 15.

La tôle de sous-baie de pare-brise 14, la tôle de doublure de pied avant 15 et la coupelle d'amortisseur 17 définissent ensemble un espace libre 18.

Le compartiment moteur 12 abrite aussi une unité électronique de commande 19 implantée dans l'espace libre 18 défini entre la tôle de sous-baie de pare-brise 14, la tôle de doublure de pied avant 15 et la coupelle d'amortisseur 17.

L'espace libre 18 choisi pour l'implantation de l'unité électronique de commande 19 dans le compartiment moteur 12 du véhicule automobile 10 est particulièrement avantageux. Il permet en effet de tirer profit de la compacité du compartiment moteur 12, en ménageant l'unité électronique de commande 19 en dessous de la tôle de sous baie de pare-brise 15 mais au-dessus des équipements du compartiment moteur 12, notamment de la coupelle d'amortisseur 17 et de la jambe de force.

Le fait que l'unité électronique de commande 19 soit logée au-dessus des équipements du compartiments moteur 12 a aussi pour avantage de protéger l'unité électronique de commande 19 des projections de pluie, notamment provenant des éclaboussures des roues et du groupe motopropulseur. L'espace libre 18 assure ainsi un environnement globalement étanche pour l'unité électronique de commande.

Par ailleurs, l'espace libre 18 dans lequel l'unité électronique de commande 19 est logé est situé à l'arrière du compartiment moteur 12 de sorte qu'il permet de protéger l'unité électronique de commande 19 contre les chocs.

L'unité électronique de commande 19 est par exemple configurée pour commander un groupe motopropulseur du véhicule automobile 10, un système de transmission du couple généré par le groupe motopropulseur aux roues du véhicule automobile 10 ou encore un système anti-blocage des roues du véhicule automobile 10. Ces exemples ne sont pas limitatifs.

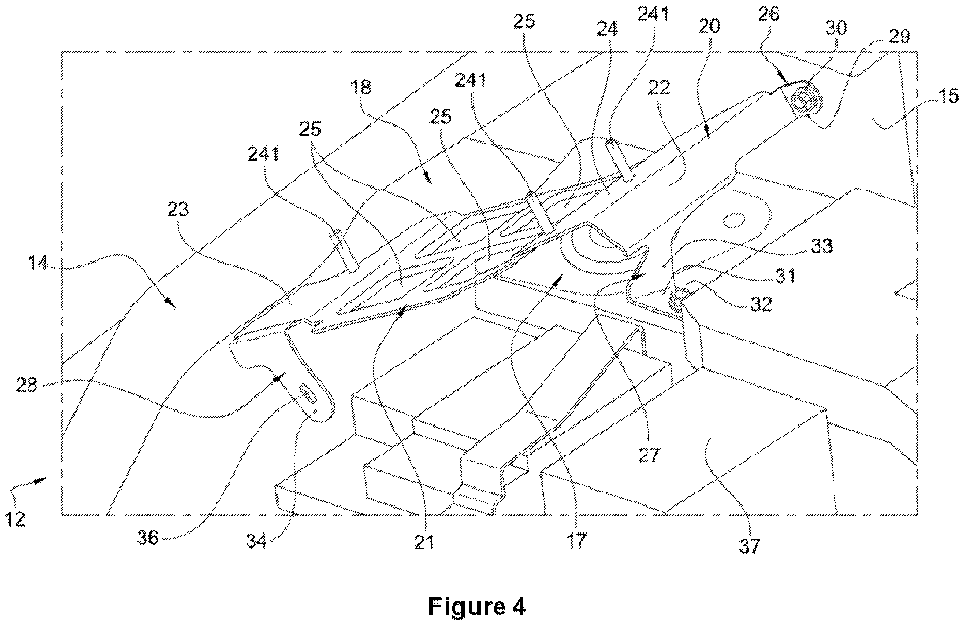

Le compartiment moteur 12 peut en outre comprendre un élément de support 20 sur lequel est installé l'unité électronique de commande 19. La figure 4 montre plus en détail l'élément de support 20.

De cette manière, il est plus délicat de remplacer l'unité électronique de commande 19, l'élément de support 20 devant d'abord être démontée du compartiment moteur 12, puis l'unité électronique de commande 19 devant elle-même être démontée de l'élément de support 20. Cela est particulièrement avantageux en cas de tentative de vol du véhicule automobile 10.

L'élément de support 20 comprend par exemple une plaque de support 21 sur laquelle est positionnée l'unité électronique de commande 19 et qui est inclinée par rapport à un plan parallèle à la direction longitudinale X et à la direction transversale Y, de sorte que la coupelle d'amortisseur 17 soit accessible depuis l'avant du véhicule automobile 10.

Pour cela, une extrémité avant 22 de la plaque de support 21 correspond par exemple à une extrémité supérieure de la plaque de support 21. En d'autres termes, l'extrémité avant 22 de la plaque de support 21 est disposée à une hauteur plus élevée que l'extrémité arrière 23 de la plaque de support 21 suivant la direction verticale Z.

De cette manière, il est possible d'accéder à la coupelle d'amortisseur 17, et donc à la jambe de force, en passant sous la plaque de support 21, sans qu'il soit nécessaire de démonter l'unité électronique de commande 19 et l'élément de support 21. L'unité électronique de commande 19 ne gêne donc pas le montage/démontage de la coupelle d'amortisseur 17 et de la jambe de force. Des opérations de manutention de la coupelle d'amortisseur 17 et de la jambe de force sont ainsi facilitées.

Par ailleurs, il n'y a pas de risque que l'élément de support 20 gêne la course de la jambe de force, lorsque cette dernière coulisse le long de l'ouverture de la coupelle d'amortisseur 17 et fait saillie de ladite coupelle dans l'espace libre 18.

De préférence, l'angle d'inclinaison de la plaque de support 21 de l'élément de support 20 par rapport au plan parallèle à la direction longitudinale X et à la direction transversale Y est compris entre 10 et 30°.

L'unité électronique de commande 19 est par exemple agencée contre une face 24 de la plaque de support 21 agencée en regard de la surface inférieure 161 de la tôle de sous-baie de pare-brise 14.

De cette manière, l'accès à la coupelle d'amortisseur 17, et donc à la jambe de force, en passant sous la plaque de support 21, est d'autant plus aisé. Ainsi, la plaque de support 21 découpe l'espace libre 18 en deux sous-espaces, l'un agencé en regard de la surface inférieure 161 de la tôle de sous-baie de pare-brise 14 et logeant l'unité électronique de commande 19, l'autre agencé en regard de la coupelle d'amortisseur 17 et libérant l'accès à ladite coupelle 17 pour les opérations de manutention de la coupelle d'amortisseur 17 et de la jambe de force.

L'unité électronique de commande 19 est par exemple fixé à l'élément de support 20 par l'intermédiaire de goujons 241 dont une extrémité est fixée à la plaque de support 21 et l'autre extrémité est enfilée dans des ouvertures agencées en correspondance dans l'unité électronique de commande 19.

La plaque de support 21 de l'élément de support 20 comprend par exemple une pluralité d'évidements 25 de sorte à assurer une circulation d'air autour de l'unité électronique de commande 19. Cela permet d'assurer le refroidissement de l'unité électronique de commande 19, lors du fonctionnement du véhicule automobile 10.

L'élément de support 20 peut en outre comprendre une première patte 26 par l'intermédiaire de laquelle l'élément de support 20 est fixé à la tôle de doublure de pied avant 15, une deuxième patte 27 par l'intermédiaire de laquelle l'élément de support 20 est fixé à la coupelle d'amortisseur 17 et une troisième patte 28 par l'intermédiaire de laquelle l'élément de support 20 est fixé au tablier 13.

La première patte 26 comprend par exemple une portion de fixation 29 accueillant des éléments de fixation 30 avec la tôle de doublure de pied avant 15. La portion de fixation 29 comprend une surface de fixation agencée perpendiculairement à la direction transversale Y et serrée contre la tôle de doublure de pied avant 15 par les éléments de fixation 30.

La première patte 26 s'étend par exemple depuis l'extrémité avant 22 ou extrémité supérieure de la plaque de support 21.

Les éléments de fixation 30 comprennent par exemple un assemblage boulonné. La portion de fixation 29 et la tôle de doublure de pied avant 15 comprennent chacune une ouverture s'étendant parallèlement à la direction transversale Y et agencée en correspondance l'une avec l'autre, de sorte à loger les éléments de fixation 30 et ainsi fixer l'élément de support 20 à la tôle de doublure de pied avant 15.

La deuxième patte 27 comprend par exemple une portion de fixation 31 accueillant des éléments de fixation 32 avec la coupelle d'amortisseur 17. La portion de fixation 31 comprend une surface de fixation agencée perpendiculairement à la direction verticale Z et serrée contre la coupelle d'amortisseur 17, notamment la surface supérieure 171 de ladite coupelle 17.

La deuxième patte 27 s'étend par exemple depuis l'extrémité avant 22 ou extrémité supérieure de la plaque de support 21.

Les éléments de fixation 32 comprennent par exemple un assemblage boulonné. La portion de fixation 31 et la coupelle d'amortisseur 17 comprennent chacune une ouverture s'étendant parallèlement à la direction verticale Z et agencée en correspondance l'une avec l'autre, de sorte à loger les éléments de fixation 32 et ainsi fixer l'élément de support 20 à la coupelle d'amortisseur 17.

La deuxième patte 27 comprend en outre une portion de liaison 33 s'étendant globalement suivant la direction verticale Z, entre l'extrémité avant 22 de la plaque de support 21 et la portion de fixation 31 de la deuxième patte 27.

La troisième patte 28 comprend par exemple une portion de fixation 34 accueillant des éléments de fixation avec le tablier 13. La portion de fixation 34 comprend une surface de fixation agencée perpendiculairement à la direction transversale Y et serrée contre le tablier 13 par les éléments de fixation.

La troisième patte 28 s'étend par exemple depuis l'extrémité arrière 23 ou extrémité inférieure de la plaque de support 21.

Les éléments de fixation comprennent par exemple un assemblage boulonné. La portion de fixation 34 et le tablier 13 comprennent chacun une ouverture 36 s'étendant parallèlement à la direction transversale Y et agencée en correspondance l'une avec l'autre, de sorte à loger les éléments de fixation et ainsi fixer l'élément de support 20 au tablier 13. L'ouverture 36 de la portion de fixation 34 de la troisième patte 28 est par exemple oblongue.

Ainsi, les première, deuxième et troisième pattes 26, 28 de l'élément de support 20 assurent la stabilité structurelle de l'élément de support 20 et donc de l'unité électronique de commande 19.

Les première et troisième pattes 26, 28 assurent la stabilité structurelle de l'élément de support 20 suivant les directions longitudinale X et transversale Y. En effet, le fait que la surface de fixation des première et troisième pattes 26, 28 soit agencée perpendiculairement à la direction transversale Y permet d'assurer la stabilité de l'élément de support 20 suivant la direction transversale Y. Par ailleurs, le fait que les première et troisième pattes 26, 28 s'étendent respectivement depuis l'extrémité avant 22 et l'extrémité arrière 23 de la plaque de support 21 permet d'assurer la stabilité de l'élément de support 20 électronique 19 suivant la direction longitudinale X. Le fait que les première et troisième pattes 26, 28 s'étendent respectivement depuis l'extrémité avant 22 et l'extrémité arrière 23 de la plaque de support 21 permet aussi d'assurer l'inclinaison de la plaque de support 21 de l'élément de support 20. La deuxième patte 26 assure quant à elle la stabilité structurelle de l'élément de support 20 suivant la direction verticale Z. Elle préserve par ailleurs l'élément de support 20 de basculer autour de la direction transversale Y et permet d'augmenter la raideur de l'élément de support 20.

Le compartiment moteur 12 peut aussi comprendre des éléments de stockage d'énergie électrique 37. Les éléments de stockage d'énergie électrique 37 sont agencés contre la coupelle d'amortisseur 17, d'un côté opposé à la doublure de pied avant 15.

De cette manière, la connexion électrique entre les éléments de stockage d'énergie électrique 37 et l'unité électronique de commande 19 est facilitée. Par ailleurs, il est ainsi possible de réduire la longueur des câbles de connexion électrique entre les éléments de stockage d'énergie électrique 38 et l'unité électronique de commande 19, ce qui permet de réduire les coûts.

Le véhicule automobile 10 présente l'avantage d'utiliser la compacité du compartiment moteur 12 pour implanter l'unité électronique de commande 19 dans un espace libre 18 agencé en dessous de la tôle de sous-baie de pare-brise 15 mais au-dessus des équipements du compartiment moteur 12, notamment de la coupelle d'amortisseur 17 et de la jambe de force. Cela permet de protéger l'unité électronique de commande 19 des chocs ainsi que des projections de pluie.

## Revendications

1. Ensemble pour un compartiment moteur (12) de véhicule automobile (10), le véhicule automobile (10) s'étendant selon un plan horizontal du véhicule suivant une direction longitudinale (X) d'avant en arrière et une direction transversale (Y), l'ensemble comprenant :
- une unité électronique de commande (19),
- une sous-baie de pare-brise (14) comprenant une tôle de sous-baie de pare-brise s'étendant globalement suivant la direction transversale (Y), la tôle de sous-baie de pare-brise (14) étant inclinée d'avant en arrière par rapport à un plan parallèle au plan du véhicule, une extrémité avant de la tôle de sous-baie de pare-brise (14) correspondant à une extrémité supérieure de ladite tôle de sous-baie de pare-brise,
- une doublure de pied avant (15) comprenant une tôle de doublure de pied avant s'étendant globalement suivant une direction verticale (Z), sensiblement perpendiculaire au plan véhicule, la tôle de doublure de pied avant (15) étant reliée à une extrémité (16), suivant la direction transversale (Y), de la tôle de sous-baie de pare-brise (14),
- une coupelle d'amortisseur (17) couplée à une jambe de force d'une suspension d'une roue avant, la coupelle d'amortisseur étant adjacente à la tôle de doublure de pied avant (15), agencée en regard et à distance d'une surface inférieure (161) de la tôle de sous-baie de pare-brise (14),
l'ensemble étant **caractérisé en ce que** la tôle de sous-baie de pare-brise (14), la coupelle d'amortisseur (17) et la tôle de doublure de pied avant (15) définissent ensemble un espace libre (18) dans lequel est logé l'unité électronique de commande (19), l'unité électronique de commande (19) étant agencée en dessous de la tôle de sous-baie de pare-brise (14) et au-dessus de la coupelle d'amortisseur (17) et de la jambe de force.

2. Ensemble selon la revendication 1, comprenant un élément de support (20) comportant une plaque de support (21) sur laquelle est positionnée l'unité électronique de commande (19), la plaque de support (21) étant inclinée par rapport à un plan parallèle au plan du véhicule, de sorte que les points de fixation de la coupelle d'amortisseur (17) soient accessibles depuis l'avant du véhicule automobile (10).

3. Ensemble selon la revendication 2, dans lequel une extrémité avant (22) de la plaque de support (21) correspond à une extrémité supérieure de ladite plaque de support.

4. Ensemble selon la revendication 2 ou la revendication 3, dans lequel l'unité électronique de commande (19) est agencée contre une face (24) de la plaque de support (21) agencée en regard de la surface inférieure (161) de la tôle sous-baie de pare-brise (14).

5. Ensemble selon l'une des revendications 2 à 4, dans lequel la plaque de support (21) de l'élément de support (20) comprend une pluralité d'évidements (25).

6. Ensemble selon l'une des revendications 2 à 5, comprenant :
- un tablier (13) s'étendant globalement suivant la direction transversale (Y) et comprenant une partie supérieure reliée à une partie inférieure de la tôle de sous-baie de pare-brise (14),
- un élément de support (20) sur lequel est installé l'unité électronique de commande (19), l'élément de support (20) comprenant une première patte (26) par l'intermédiaire de laquelle l'élément de support (20) est fixé à la tôle de doublure de pied avant (15), une deuxième patte (27) par l'intermédiaire de laquelle l'élément de support (20) est fixé à la coupelle d'amortisseur (17) et une troisième patte (28) par l'intermédiaire de laquelle l'élément de support (20) est fixé au tablier (13).

7. Ensemble selon la revendication 6, dans lequel les première et troisième pattes (26, 28) comprennent chacune une portion de fixation (29, 31) accueillant des éléments de fixation (30, 32) avec la tôle de doublure de pied avant (15) et avec le tablier (13) respectivement, les portions de fixation (29, 31) des première et troisième pattes (26, 28) comprenant chacune une surface de fixation agencée perpendiculairement à la direction transversale (Y) et serrée respectivement contre la tôle de doublure de pied avant (15) et contre le tablier (13) par les éléments de fixation (30, 32).

8. Ensemble selon la revendication 7, lorsqu'elle dépend de la revendication 2, dans lequel les première et troisième pattes (26, 28) s'étendent respectivement depuis une extrémité avant (22) de la plaque de support (21) et depuis une extrémité arrière (23) de la plaque de support (21).

9. Ensemble selon l'une des revendications 1 à 8, comprenant en outre un ou plusieurs éléments d'alimentation en énergie électrique (37) agencés contre la coupelle d'amortisseur (17), d'un côté opposé à la tôle de doublure de pied avant (15).

10. Véhicule automobile (10) s'étendant d'avant en arrière suivant une direction longitudinale (X) et comprenant un ensemble selon l'une quelconque des revendications 1 à 9.

## Patentansprüche

1. Anordnung für einen Motorraum (12) eines Kraftfahrzeugs (10), wobei sich das Kraftfahrzeug (10) in einer horizontalen Ebene des Fahrzeugs in einer von vorne nach hinten gehenden Längsrichtung (X) und einer Querrichtung (Y) erstreckt, wobei die Anordnung Folgendes umfasst:
- eine elektronische Steuereinheit (19),
- einen Windschutzscheibenunterrahmen (14), der ein Windschutzscheibenunterrahmenblech umfasst, das sich in der Querrichtung (Y) erstreckt, wobei das Windschutzscheibenunterrahmenblech (14) bezüglich einer parallel zur Ebene des Fahrzeugs verlaufenden Ebene von vorne nach hinten geneigt ist, wobei ein vorderes Ende des Windschutzscheibenunterrahmenblechs (14) einem oberen Ende des Windschutzscheibenunterrahmenblechs entspricht,
- eine A-Säulenauskleidung (15), die ein A-Säulenauskleidungsblech umfasst, das sich allgemein in eine vertikale Richtung (Z) im Wesentlichen senkrecht zu der Fahrzeugebene erstreckt, wobei das A-Säulenauskleidungsblech (15) in der Querrichtung (Y) mit einem Ende (16) des Windschutzscheibenunterrahmenblechs (14) verbunden ist,
- einen an eine Druckstrebe einer Aufhängung eines Vorderrads gekoppelten Stoßdämpferdom (17), wobei der Stoßdämpferdom dem A-Säulenauskleidungsblech (15) benachbart und gegenüber einer unteren Fläche (161) des Windschutzscheibenunterrahmenblechs (14) und von dieser beabstandet angeordnet ist,
**dadurch gekennzeichnet, dass** das Windschutzscheibenunterrahmenblech (14), der Stoßdämpferdom (17) und das A-Säulenauskleidungsblech (15) gemeinsam einen Freiraum (18) definieren, in dem die elektronische Steuereinheit (19) aufgenommen ist,
wobei die elektronische Steuereinheit (19) unter dem Windschutzscheibenunterrahmenblech (14) und über dem Stoßdämpferdom (17) und der Druckstrebe angeordnet ist.

2. Anordnung nach Anspruch 1, umfassend ein Stützelement (20), das eine Stützplatte (21) aufweist, auf der die elektronische Steuereinheit (19) positioniert ist, wobei die Stützplatte (21) bezüglich einer parallel zu der Ebene des Fahrzeugs verlaufenden Ebene geneigt ist, so dass die Befestigungspunkte des Stoßdämpferdoms (17) von der Vorderseite des Kraftfahrzeugs (10) aus zugänglich sind.

3. Anordnung nach Anspruch 2, wobei ein vorderes Ende (22) der Stützplatte (21) einem oberen Ende der Stützplatte entspricht.

4. Anordnung nach Anspruch 2 oder Anspruch 3, wobei die elektronische Steuereinheit (19) an einer Fläche (24) der Stützplatte (21) angeordnet ist, die gegenüber der unteren Fläche (161) des Windschutzscheibenunterrahmenblechs (14) angeordnet ist.

5. Anordnung nach einem der Ansprüche 2 bis 4, wobei die Stützplatte (21) des Stützelements (20) eine Vielzahl von Aussparungen (25) umfasst.

6. Anordnung nach einem der Ansprüche 2 bis 5, umfassend:
- eine Stirnwand (13), die sich global in der Querrichtung (Y) erstreckt und einen oberen Teil umfasst, der mit einem unteren Teil des Windschutzscheibenunterrahmenblechs (14) verbunden ist,
- ein Stützelement (20), an dem die elektronische Steuereinheit (19) installiert ist, wobei das Stützelement (20) eine erste Lasche (26), mittels derer das Stützelement (20) an dem A-Säulenauskleidungsblech (15) befestigt ist, eine zweite Lasche (27), mittels derer das Stützelement (20) an dem Stoßdämpferdom (17) befestigt ist, und eine dritte Lasche (28), mittels derer das Stützelement (20) an der Stirnwand (13) befestigt ist, umfasst.

7. Anordnung nach Anspruch 6, wobei die erste und die dritte Lasche (26, 28) jeweils einen Befestigungsabschnitt (29, 31) umfassen, der Befestigungselemente (30, 32) mit dem A-Säulenauskleidungsblech (15) bzw. mit der Stirnwand (13) aufnimmt, wobei die Befestigungsabschnitte (29, 31) der ersten und der dritten Lasche (26, 28) jeweils eine Befestigungsfläche umfassen, die senkrecht zu der Querrichtung (Y) angeordnet und mittels der Befestigungselemente (30, 32) an dem A-Säulenauskleidungsblech (15) bzw. an der Stirnwand (13) festgezogen ist.

8. Anordnung nach Anspruch 7, wenn er von Anspruch 2 abhängig ist, wobei sich die erste und die dritte Lasche (26, 28) von einem vorderen Ende (22) der Stützplatte (21) bzw. von einem hinteren Ende (23) der Stützplatte (21) erstrecken.

9. Anordnung nach einem der Ansprüche 1 bis 8, ferner umfassend ein oder mehrere Elemente (37) zur Versorgung mit elektrischer Energie, die an einer dem A-Säulenauskleidungsblech (15) gegenüberliegenden Seite an dem Stoßdämpferdom (17) angeordnet sind.

10. Kraftfahrzeug (10), das sich von vorne nach hinten in einer Längsrichtung (X) erstreckt und eine Anordnung nach einem der Ansprüche 1 bis 9 umfasst.

## Claims

1. Assembly for an automotive vehicle (10) engine compartment (12), the automotive vehicle (10) extending in a horizontal plane of the vehicle in a longitudinal direction (X) from front to rear and a transverse direction (Y), the assembly comprising:
- an electronic control unit (19),
- a scuttle panel (14) comprising a scuttle panel sheet extending generally in the transverse direction (Y), the scuttle panel(14)sheet being inclined from front to rear with respect to a plane that is parallel to the plane of the vehicle, a front end of the scuttle panel(14) sheet corresponding to an upper end of said scuttle panel sheet,
- an A-pillar lining (15) comprising an A-pillar lining sheet extending generally in a vertical direction (Z), substantially perpendicular to the vehicle plane, the A-pillar lining (15) sheet being connected to one end (16), in the transverse direction (Y), of the scuttle panel (14) sheet,
- a shock absorber mount (17) coupled to a suspension strut for a front wheel, the shock absorber mount being adjacent to the A-pillar lining (15) sheet, arranged facing and at a distance from a lower surface (161) of the scuttle panel (14) sheet,
the assembly being **characterized in that** the scuttle panel (14) sheet, the shock absorber mount (17) and the A-pillar lining (15) sheet together define a free space (18) in which the electronic control unit (19) is accommodated, the electronic control unit (19) being arranged below the scuttle panel 14 sheet and above the shock absorber mount (17) and the strut.

2. Assembly according to Claim 1, comprising a support element (20) including a support plate (21) on which the electronic control unit (19) is positioned, the support plate (21) being inclined with respect to a plane parallel to the plane of the vehicle, such that the fixing points of the shock absorber mount (17) can be accessed from the front of the automotive vehicle (10).

3. Assembly according to Claim 2, wherein a front end (22) of the support plate (21) corresponds to an upper end of said support plate.

4. Assembly according to Claim 2 or Claim 3, wherein the electronic control unit (19) is arranged against a face (24) of the support plate (21) arranged facing the lower surface (161) of the scuttle panel (14) sheet.

5. Assembly according to one of Claims 2 to 4, wherein the support plate (21) of the support element (20) comprises a plurality of apertures (25).

6. Assembly according to one of Claims 2 to 5, comprising:
- a fire wall (13) extending generally in the transverse direction (Y) and comprising an upper part connected to a lower part of the scuttle panel (14) sheet, and
- a support element (20) on which the electronic control unit (19) is fitted, the support element (20) comprising a first tab (26) by means of which the support element (20) is fixed to the A-pillar lining (15) sheet, a second tab (27) by means of which the support element (20) is fixed to the shock absorber mount (17) and a third tab (28) by means of which the support element (20) is fixed to the fire wall (13).

7. Assembly according to Claim 6, wherein the first and third tabs (26, 28) each comprise a fixing portion (29, 31) receiving elements (30, 32) for fixing to the A-pillar lining (15) sheet and to the fire wall (13), respectively, the fixing portions (29, 31) of the first and third tabs (26, 28) each comprising a fixing surface arranged perpendicularly with respect to the transverse direction (Y) and clamped against the A-pillar lining (15) sheet and against the fire wall (13), respectively, by the fixing elements (30, 32).

8. Assembly according to Claim 7, when it is dependent upon Claim 2, wherein the first and third tabs (26, 28) extend from a front end (22) of the support plate (21) and from a rear end (23) of the support plate (21), respectively.

9. Assembly according to one of Claims 1 to 8, further comprising one or more electrical energy supply elements (37) arranged against the shock absorber mount (17), on an opposite side to the A-pillar lining (15) sheet.

10. Automotive vehicle (10) extending from front to rear in a longitudinal direction (X) and comprising an assembly according to any one of Claims 1 to 9.
